(19) Europäisches Patentamt
European Patent Office
Office européen des brevets

(11) **EP 4 527 515 A1**

(12) **EUROPÄISCHE PATENTANMELDUNG**

(43) Veröffentlichungstag:
**26.03.2025 Patentblatt 2025/13**

(21) Anmeldenummer: **23198440.2**

(22) Anmeldetag: **20.09.2023**

(51) Internationale Patentklassifikation (IPC):
**B09C 1/00** *(2006.01)* **C02F 1/00** *(2023.01)*
**E21B 43/02** *(2006.01)* **E03B 3/16** *(2006.01)*
**E03B 3/18** *(2006.01)* C02F 103/06 *(2006.01)*

(52) Gemeinsame Patentklassifikation (CPC):
**B09C 1/002; E03B 3/16; E03B 3/18; E21B 43/02;**
B09C 2101/00; C02F 1/001; C02F 2103/06

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **IEG - Technologie GmbH**
**73344 Gruibingen (DE)**

(72) Erfinder: **Alesi, Eduard J.**
**73344 Gruibingen (DE)**

(74) Vertreter: **Ruckh, Rainer Gerhard**
**Patentanwaltskanzlei Ruckh**
**Jurastraße 1**
**73087 Bad Boll (DE)**

(54) **VORRICHTUNG MIT WENIGSTENS EINER FILTERANORDNUNG**

(57) Die Erfindung betrifft ein Verfahren zum Betrieb einer Vorrichtung mit wenigstens einer Filteranordnung (1). Die oder jede Filteranordnung (1) weist ein Rohr (5) auf, das in einem Schacht angeordnet ist. Der Schacht ist in ein Erdreich (2) eingearbeitet wobei dessen Oberseite an einer Erdoberfläche (2a) des Erdreichs (2) ausmündet. In dem Rohr (5) sind wenigstens zwei Filtereinheiten (6) in unterschiedlichen Höhenniveaus in Abstand zueinander angeordnet, wobei das Rohr (5) im Bereich jeder Filtereinheit (6) wenigstens abschnittsweise wasserdurchlässig ist. Jeder Filtereinheit (6) ist eine Pumpe (9) und ein in Richtung der Erdoberfläche (2a) verlaufen-des Förderrohr (8) zugeordnet. Eine Steuereinheit (10) ist vorhanden, die eine zeitabhängige Steuerung der Pumpen (9) derart durchführt, dass selektiv nur eine der Pumpen (9) aktiviert wird, wobei im Bereich der dieser Pumpe (9) zugeordneten ersten Filtereinheit (6) ein Unterdruck erzeugt wird. Durch Reinfiltration vom Wasser im Bereich der weiteren Filtereinheit (6) wird ein Überdruck generiert, wodurch im Erdreich (2) ein Grundwasserkreislauf mit einer Strömung von der weiteren Filtereinheit (6) zur ersten Filtereinheit (6) erhalten wird.

Fig. 1

EP 4 527 515 A1

**Beschreibung**

Die Erfindung betrifft eine Vorrichtung mit wenigstens einer Filteranordnung und ein Verfahren zum Betrieb einer derartigen Vorrichtung.

Eine derartige Filteranordnung dient allgemein zur Behandlung und Reinigung von Grundwasser. Hierzu werden in einem unterirdischen Schacht mehrere die Filteranordnung bildende Filtereinheiten in Abstand übereinander angeordnet, wobei mit den einzelnen Filtereinheiten im Erdreich vorhandenes Grundwasser gereinigt werden kann. Auch ist es möglich von den Filtereinheiten Wasser zu einer oberirdischen Wasseraufbereitungseinheit über geeignete Rohrsysteme mit zugeordneten Pumpen zuzuführen.

Generell können derartige Vorrichtungen eine derartige Mehrfachfilteranordnung mit einer Anzahl von einzelnen Filteranordnungen aufweisen, die üblicherweise verteilt im Erdreich verankert sind und unabhängig voneinander arbeiten.

Ein Problem bei derartigen Vorrichtungen besteht darin, dass im Erdreich feine Strukturen, insbesondere Kapillarstrukturen oder Dead-End-Poren, vorhanden sind, in welchen sich Schadstoffe absetzen. Das Grundwasser kommt in Kontakt mit diesen Schadstoffen und wird entsprechend verunreinigt. Zwar kann mit den bekannten Filteranordnungen Grundwasser gereinigt werden, jedoch unvollständig, da die in den Kapillarstrukturen vorhandenen Schadstoffe dauerhaft verbleiben.

Der Erfindung liegt die Aufgabe zugrunde, eine Vorrichtung der eingangs genannten Art bereitzustellen, welche eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zum Betrieb einer Vorrichtung mit wenigstens einer Filteranordnung. Die oder jede Filteranordnung weist ein Rohr auf, das in einem Schacht angeordnet ist. Der Schacht ist in ein Erdreich eingearbeitet wobei dessen Oberseite an einer Erdoberfläche des Erdreichs ausmündet. In dem Rohr sind wenigstens zwei Filtereinheiten in unterschiedlichen Höhenniveaus in Abstand zueinander angeordnet, wobei das Rohr im Bereich jeder Filtereinheit wenigstens abschnittsweise wasserdurchlässig ist. Jeder Filtereinheit ist eine Pumpe und ein in Richtung der Erdoberfläche verlaufendes Förderrohr zugeordnet. Eine Steuereinheit ist vorhanden, die eine zeitabhängige Steuerung der Pumpen derart durchführt, dass selektiv nur eine der Pumpen aktiviert wird, wobei im Bereich der dieser Pumpe zugeordneten ersten Filtereinheit ein Unterdruck erzeugt wird. Durch Reinfiltration vom Wasser im Bereich der weiteren Filtereinheit wird ein Überdruck generiert, wodurch im Erdreich ein Grundwasserkreislauf mit einer Strömung von der weiteren Filtereinheit zur ersten Filtereinheit erhalten wird.

Die Erfindung betrifft auch ein entsprechendes Verfahren.

Die erfindungsgemäße Vorrichtung umfasst wenigstens eine in einem Schacht eines Erdreichs angeordnete Filteranordnung. In an sich bekannter Weise sind in dem Rohr wenigstens zwei Filtereinheiten in unterschiedlichen Höhenniveaus in Abstand zueinander angeordnet, wobei das Rohr im Bereich jeder Filtereinheit wenigstens abschnittsweise wasserdurchlässig ist, und wobei jeder Filtereinheit eine Pumpe und ein in Richtung der Erdoberfläche verlaufendes Förderrohr zugeordnet ist.

Erfindungsgemäß weist die Vorrichtung eine Steuereinheit auf, die eine zeitabhängige Steuerung der Pumpen derart durchführt, dass selektiv nur eine der Pumpen aktiviert wird, wobei im Bereich der dieser Pumpe zugeordneten ersten Filtereinheit ein Unterdruck erzeugt wird. Weiterhin wird durch Reinfiltration von Wasser im Bereich der weiteren Filtereinheit ein Überdruck generiert. Dadurch wird im Erdreich ein Grundwasserkreislauf mit einer Strömung in einer entsprechenden Richtung von der weiteren Filtereinheit zur ersten Filtereinheit erhalten.

Durch die mit der Steuereinheit durchgeführte Steuerung, bei der in Aktivierungsintervallen unterschiedliche Pumpen aktiviert werden, wird die Strömungsrichtung des Grundwasserkreislaufs umgekehrt, wodurch die entsprechenden Reinigungsvorgänge des Grundwassers variiert werden können.

Ein weiterer wesentlicher Vorteil besteht darin, dass durch zeitlich variierende Strömungsrichtungen des Grundwasserkreislaufs im Erdreich vorhandene Schadstoffe besser herausgelöst werden können, wodurch eine erheblich verbesserte Grundwasserreinigung erzielt wird. Insbesondere können so Schadstoffe, die in Kapillarstrukturen oder Dead-End-Poren des Erdreichs vorhanden sind, herausgelöst werden.

Besonders vorteilhaft wird mittels der Steuereinheit eine zeitlich variierende Aktivierung der Pumpen durchgeführt, wobei der Zeitablauf der Aktivierung einstellbar ist.

Dabei werden mittels der Steuereinheit die Pumpen in einem einstellbaren Zeittakt alternierend aktiviert.

Der Zeitablauf kann durch eine Parametrierung in der Steuereinheit vorgegeben sein. Weiterhin ist es möglich, den Zeitablauf durch Bedienereingaben in die Steuereinheit vorzugeben.

Durch den einstellbaren Zeitablauf kann mit der Steuereinheit der Zeittakt vorgegeben werden, in dem unterschiedliche Pumpen aktiviert werden und damit die Strömungsrichtung des Grundwasserkreislaufs umgekehrt wird. Insbesondere lassen sich auf diese Weise pulsierende Strömungen des Grundwasserkreislaufs realisieren, die in ihrer Frequenz einstellbar sind.

Insbesondere ist es auch möglich, dass durch eine alternierende Aktivierung der Pumpen ein oszillierender Grundwasserkreislauf generiert wird.

Durch diese pulsierende bzw. oszillierende Strömungen können gezielt Schadstoffe, die in Kapillaren des Erdreichs festgesetzt sind, herausgelöst werden, wodurch die Grundwasserreinigung erheblich verbessert wird.

Weiterhin vorteilhaft werden mit der Steuereinheit Pumpraten von aktivierten Pumpen gesteuert.

Dadurch wird eine Mengensteuerung realisiert, mit der sich die Reichweite des Grundwasserkreislaufs einstellen lässt.

Auch hier ist eine zeitabhängige Steuerung derart möglich, dass die Pumprate zyklisch, vorzugsweise zwischen zwei Sollwerten der Pumpraten, verändert wird, wodurch sich auch ein pulsierender bzw. oszillierender Grundwasserkreislauf ergibt.

Diese zeitliche Steuerung der Pumpraten kann mit einer zyklischen Aktivierung unterschiedlicher Pumpen kombiniert werden, so dass zusätzlich eine Richtungsänderung des Grundwasserkreislaufs erhalten wird.

Bei der erfindungsgemäßen zeitabhängigen Steuerung, die mit der Steuereinheit durchgeführt wird, wird jeweils nur eine einer Filtereinheit zugeordnete Pumpe aktiviert, so dass in dieser Filtereinheit ein Unterdruck erzeugt wird.

In der wenigstens einer weiteren Filtereinheit wird dagegen durch eine Reinfiltration über das zugeordnete Förderrohr ein Überdruck generiert. Dies kann dadurch erfolgen, dass das Wasser, das mit der aktivierten Pumpe durch das zugeordnete Förderrohr nach oben gefördert wird, direkt dem Förderrohr der weiteren Filtereinheit zugeführt wird. Alternativ kann eine Wasserzufuhr von einer Behandlungseinheit, insbesondere Wasseraufbereitungseinheit, erfolgen.

Vorteilhaft ist die Reinfiltration eine von der Steuereinheit gesteuerte Wasserzufuhr zum Förderrohr der weiteren Filtereinheit.

Im einfachsten Fall weist die oder jede Filteranordnung der erfindungsgemäßen Vorrichtung zwei Filtereinheiten auf.

Gemäß einer vorteilhaften Weiterbildung weist die oder wenigstens eine Filteranordnung wenigstens drei Filtereinheiten auf, die im Rohr in unterschiedlichen Höhenniveaus in Abstand zueinander angeordnet sind. Mit der Steuereinheit ist jeweils nur eine einer Filtereinheit zugeordnete Pumpe aktiviert.

Dabei kann eine Reinfiltration von Filtereinheiten, die einer nicht aktivierten Pumpe zugeordnet sind, erfolgen.

Dadurch, dass mehr als zwei Filtereinheiten in der Filteranordnung vorhanden sind, kann eine Vielzahl unterschiedlicher Konfigurationen von Grundwasserkreisläufen realisiert werden.

Gemäß einer vorteilhaften Ausgestaltung bildet die erfindungsgemäße Vorrichtung eine Mehrfachfilteranordnung, die mehrere Filteranordnungen aufweist, wobei die Pumpen aller Filteranordnungen von der Steuereinheit gesteuert werden.

Vorteilhaft werden auch Reinfiltrationen von Filtereinheiten aller Filteranordnungen von der Steuereinheit gesteuert.

Mit der Mehrfachfilteranordnung ist eine großflächige Grundwasserreinigung möglich. Dies gilt insbesondere auch für schwer zugängliche Gebiete, wobei in diesem Fall Filteranordnungen an den Rändern derartiger Gebiete angeordnet werden können.

Vorteilhaft werden durch Steuerung von Pumpen der Filteranordnung mittels der Steuereinheit wechselwirkende Grundwasserkreisläufe unterschiedlicher Filteranordnungen erhalten, wobei die Wechselwirkungen durch Überlagerungen der Strömungen der Grundwasserkreisläufe ausgebildet werden.

Durch die Wechselwirkung von Grundwasserkreisläufen verschiedener Filteranordnungen können Synergieeffekte derart erzielt werden, dass sich die Filteranordnung in ihren Wirkungen ergänzen, bzw. dass Eigenschaften einzelner Filteranordnungen in weiteren Filteranordnungen mitgenutzt werden können. Beispiele hierfür sind Inhaltsstoffe, wie z.B. Nährstoffe, die im Wasserkreislauf einer Filteranordnung enthalten sind und über wechselwirkende Grundwasserkreisläufe an weitere Filteranordnungen weitergegeben werden können.

Hierzu kann insbesondere mittels der Steuereinheit eine Steuerung von Pumpen von Filteranordnungen derart durchgeführt werden, dass Strömungen von einer Filteranordnung zu einer weiteren Filteranordnung generiert werden.

Die Steuereinheit bestimmt mit ihrer zentralen Steuerungsfunktion den Grad der Wechselwirkung verschiedener Grundwasserkreisläufe, wobei die Steuereinheit durch Steuerung der einzelnen Filteranordnungen die Wechselwirkung orts- und zeitabhängig vorgeben kann.

Weiter vorteilhaft wird die Anzahl von wechselwirkenden Grundwasserkreisläufen über die Steuereinheit vergeben.

Die Erfindung wird im Folgenden anhand der Zeichnungen erläutert. Es zeigen:

| | |
|---|---|
| Figur 1: | Beispiel einer ersten Ausführungsform einer Filteranordnung für die erfindungsgemäße Vorrichtung. |
| Figur 2: | Beispiel einer zweiten Ausführungsform einer Filteranordnung für die erfindungsgemäße Vorrichtung. |
| Figuren 3a, b: | Diagramme für eine zeitabhängige Steuerung einer Filteranordnung mit zwei Filtereinheiten. |
| Figuren 4a-c: | Diagramme für eine zeitabhängige Steuerung einer Filteranordnung mit drei Filtereinheiten. |

Figuren 5a-c:   Diagramme für eine zeitabhängige Steuerung von zwei Filteranordnungen einer Mehrfachfilteranordnung mit jeweils zwei Filtereinheiten.

Figur 6:   Beispiel einer Mehrfachfilteranordnung.

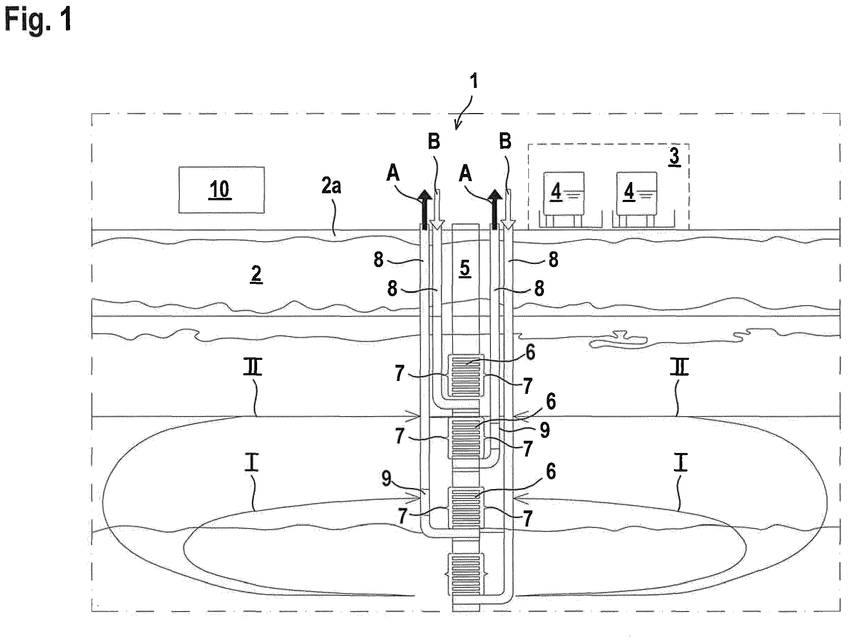

Figur 1 zeigt ein Beispiel einer ersten Ausführungsform einer Filteranordnung 1. Diese ist in einem unterirdischen Schacht integriert, der in ein Erdreich 2 eingearbeitet ist und an der Erdoberfläche 2a des Erdreichs 2 ausmündet Der Filteranordnung 1 ist eine oberirdisch angeordnete Wasseraufbereitungseinheit 3 zugeordnet, die typischerweise mehrere Behandlungsstationen 4 zur Aufbereitung von im Erdreich 2 vorhandenen Grundwasser dient.

Die im Schacht angeordnete Filteranordnung 1 weist ein zylindrisches Rohr 5 auf, dessen Längsachse in vertikaler Richtung verläuft. Das Rohr 5 besteht vorteilhaft aus Edelstahl.

Im Rohr 5 sind mehrere Filtereinheiten 6 in Abstand übereinander angeordnet. Die Filtereinheiten 6 können aus Kunststoff, Stahl oder sonstigen metallischen Werkstoffen bestehen. Beispielsweise sind die Filtereinheiten 6 als Wickeldrahtfilter ausgebildet. In den Filtereinheiten 6 werden physikalische Behandlungen, wie z.B. Absorptionsprozesse zur Filterung von Schadstoffen, durchgeführt.

Die Wand des Rohrs 5 ist im Bereich der Filtereinheit 6 wasserdurchlässig, wodurch Durchlassöffnungen 7 gebildet werden. Die Durchlassöffnungen 7 können durch eine Siebstruktur in der Wand des Rohrs 5 gebildet sein. Die Durchlassöffnungen 7 können sich über den gesamten Umfang des Rohrs 5 erstrecken oder nur über einen Teilwinkelbereich in Umfangsrichtung. Im Übrigen ist die Wand des Rohrs 5 wasserundurchlässig.

Die wasserundurchlässigen Wandsegmente des Rohrs 5 sind mit wasserundurchlässigem Material, insbesondere einem Quellmaterial wie Bentonit, umgeben.

Dagegen sind die den Filtereinheiten 6 zugeordneten Durchlassöffnungen 7 des Rohrs 5 von einem wasserdurchlässigen Material, wie z.B. Kies, umgeben. Dadurch ist ein Wasseraustausch zwischen den Filtereinheiten 6 und dem Erdbereich ermöglicht, d.h. es kann Grundwasser aus dem Erdreich 2 den Filtereinheiten 6 zugeführt werden, oder es kann aufbereitetes Wasser von den Filtereinheiten 6 in das Erdreich 2 geleitet werden.

Die einzelnen Filtereinheiten 6 sind in voneinander wasserdicht separierten Kammern einzeln angeordnet.

Wie Figur 1 zeigt, weist die Filteranordnung 1 eine Anordnung von peripheren, d.h. außerhalb des Rohrs 5 verlaufenden Förderrohren 8, auf. Die Längsachsen der Förderrohre 8 verlaufen parallel zueinander und parallel zur Längsachse des Rohrs 5. Die Förderrohre 8 sind in Abstand zueinander und in Abstand zum Rohr 5 angeordnet, wobei die Förderrohre 8 insbesondere eine rotationssymmetrische Anordnung derart bilden, dass benachbarte Förderrohre 8 jeweils um dieselben Winkel versetzt zueinander angeordnet sind.

Die oberen Enden der Förderrohre 8 münden dicht oberhalb der Oberfläche des Erdreichs 2 aus. Die unteren Enden der Förderrohre 8 münden in das Rohr 5 ein. Dabei ist jedes Förderrohr 8 jeweils einer Filtereinheit 6 zugeordnet. Wie Figur 1 zeigt, mündet jedes Förderrohr 8 dicht unterhalb der zugeordneten Filtereinheiten 6 in das Rohr 5 ein.

In jedes Förderrohr 8 ist eine Pumpe 9 eingeführt. Jede Pumpe 9 ist im unteren Teil des jeweiligen Förderrohrs 8 im Bereich der zugeordneten Filtereinheiten 6 in einer Sollposition gehalten.

Erfindungsgemäß ist eine Steuereinheit 10, mittels derer die Pumpen 9 einzeln selektiv und zeitabhängig aktiviert werden können, vorgesehen. Hierzu ist die Steuereinheit 10 mit den Pumpen 9 über nicht dargestellte Leitungen verbunden. Die Steuereinheit 10 ist von einer Rechnereinheit, wie z.B. einem Mikroprozessorsystem, gebildet.

Eine aktivierte Pumpe 9 fördert Wasser über das jeweilige Förderrohr 8 nach oben, veranschaulicht durch Pfeile A in Figur 1, wodurch in der zugeordneten Filtereinheit 6 ein Unterdruck entsteht. Dadurch wird Grundwasser aus dem Erdreich 2 in die jeweilige Filtereinheit 6 eingeleitet.

Auch wird eine Reinfiltration von Filtereinheiten 6 über die Steuereinheit 10 gesteuert. Bei der Reinfiltration wird Wasser von der Wasseraufbereitungseinheit 3 oder von einem Förderrohr 8, dessen Pumpe 9 aktiviert ist, einem Förderrohr 8 mit nicht aktivierter Pumpe 9 zugeführt (veranschaulicht durch die Pfeile B in Figur 1). Dadurch wird in den entsprechenden Filtereinheiten 6 ein Überdruck erzielt, so dass von dieser Filtereinheit 6 Wasser in das Erdreich 2 abgegeben wird.

Dadurch werden mit den Pfeilen I, II gekennzeichnete Grundwasserkreisläufe erhalten.

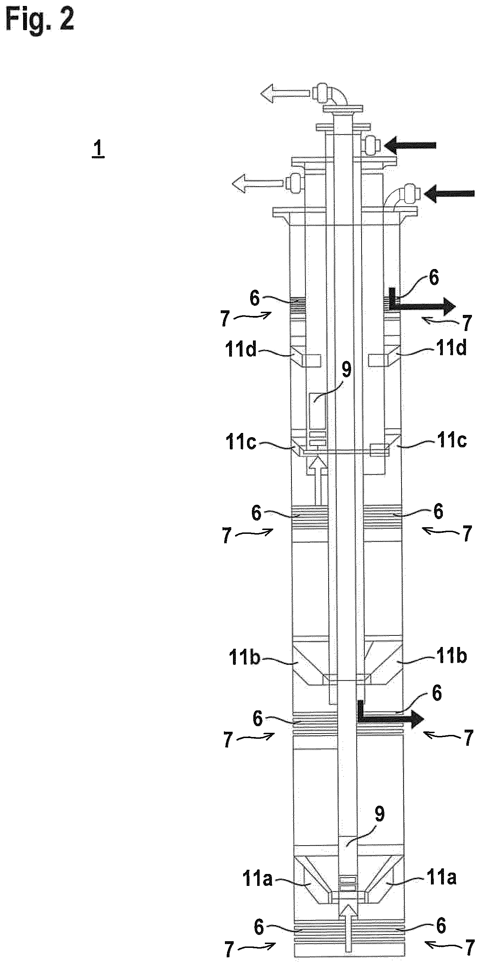

Figur 2 zeigt eine zweite Ausführungsform einer Filteranordnung 1. Diese Filteranordnung 1 ist in identischer Weise wie die Filteranordnungen 1 gemäß Figur 1 in einen Schacht im Erdreich 2 integriert und an eine oberirdische Wasseraufbereitungseinheit 3 angebunden.

Auch die Filteranordnung 1 gemäß Figur 2 weist ein Rohr 5 auf, in welchem mehrere Filtereinheiten 6 in Abstand übereinander angeordnet sind. Im Bereich der Filtereinheiten 6 sind wieder wasserdurchlässige Wandsegmente des Rohrs 5 vorhanden, die Durchlassöffnungen 7 bilden und welche an der Unterseite des Rohrs 5 mit einem wasserdurchlässigen Material wie Kies umgeben sind. Die restlichen Wandsegmente des Rohrs 5 sind wasserundurchlässig und entsprechend an der Außenseite des Rohrs 5 mit einem wasserundurchlässigen Material wie Bentonit umgeben.

Bei der Filteranordnung 1 gemäß Figur 2 ist innerhalb des Rohrs 5 eine konzentrische Anordnung von Förderrohren 8 vorgesehen, deren Längsachsen mit der Längsachse des Rohrs 5 zusammenfallen.

Die einzelnen Förderrohre 8 sind in Zentriereinsätzen 11a bis 11d gelagert, die an der Innenwand des Rohrs 5 befestigt sind.

In den Förderrohren 8 sind wieder Pumpen 9 gelagert. Analog zur Ausführungsform gemäß Figur 1 sind der Filteranordnung wieder eine Wasseraufbereitungseinheit 3 und eine Steuereinheit 10 zugeordnet (in Figur 2 nicht dargestellt).

Mit der erfindungsgemäßen Steuerung, die mittels der Steuereinheit 10 durchgeführt wird, können einzelne Pumpen 9 einer oder mehrerer Filteranordnungen 1 zeitabhängig aktiviert werden, wobei bei Aktivierung einer Pumpe 9 in der zugeordneten Filtereinheit 6 ein Unterdruck erzeugt wird. Korrespondierend hierzu steuert die Steuereinheit 10 auch Reinfiltrationen von Filtereinheiten 6, deren zugeordnete Pumpen 9 nicht aktiviert sind.

Durch diese Steuerung können Richtungen von Grundwasserkreisläufen zeitabhängig, d.h. in vorgegebenen Zeitabfolgen, geändert werden. Dabei sind diese Zeitabfolgen einstellbar.

Insbesondere werden mittels der Steuereinheit 10 die Pumpen 9 alternierend in einem einstellbaren Zeittakt alternierend aktiviert.

Dadurch können insbesondere pulsierende Grundwasserkreisläufe erzeugt werden, mittels derer in Kapillaren des Erdreichs 2 festsitzende Schadstoffe herausgelöst werden.

Gemäß einer spezifischen Ausgestaltung wird durch eine alternierende Aktivierung der Pumpen 9 ein oszillierender Grundwasserkreislauf generiert.

Weiterhin können mit der Steuereinheit 10 Pumpraten von aktivierten Pumpen 9 gesteuert werden.

Durch zeitlich veränderliche, insbesondere zyklisch variierende Pumpraten, können auch pulsierende bzw. oszillierende Grundwasserkreisläufe realisiert werden.

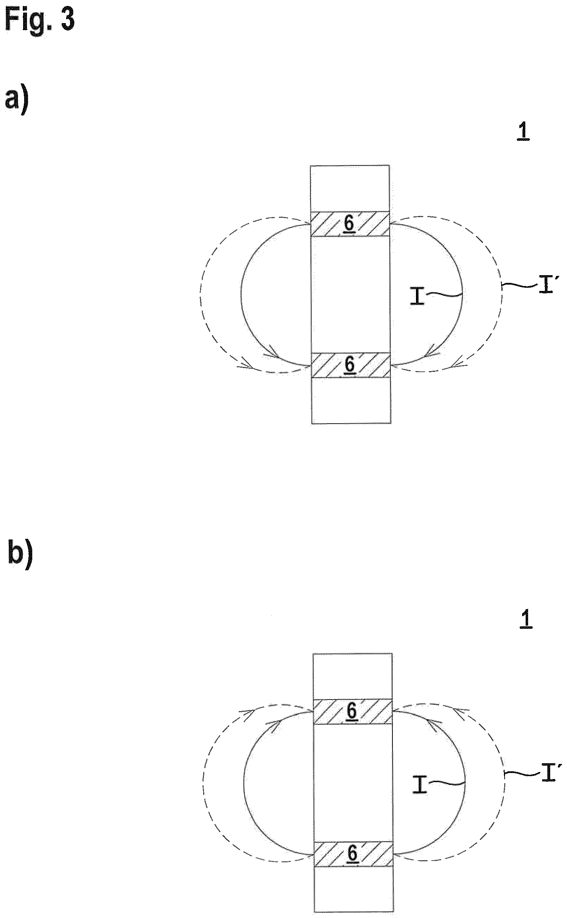

Die zeitabhängige Steuerung für eine Filteranordnung 1 mit zwei Filtereinheiten 6 ist in den Figuren 3a und 3b veranschaulicht.

Figur 3a zeigt die Situation, wenn mittels der Steuereinheit 10 nur die der unteren Filtereinheit 6 zugeordnete Pumpe 9 aktiviert ist, so dass in dieser Filtereinheit 6 ein Unterdruck erzeugt wird. Gleichzeitig wird mit der Steuereinheit 10 eine Reinfiltration der oberen Filtereinheit 6 bewirkt, so dass in dieser Filtereinheit 6 ein Überdruck entsteht. Dadurch wird der mit dem Pfeil I gekennzeichnete Grundwasserkreislauf im Erdreich 2 erhalten, der von der oberen zur unteren Filtereinheit 6 verläuft. Durch eine Variation der Pumprate der aktivierten Pumprate kann die Reichweite des Grundwasserkreislaufs geändert werden, wie mit dem Pfeil I' veranschaulicht.

Figur 3b zeigt die Situation, wenn mittels der Steuereinheit 10 nur die der oberen Filtereinheit 6 zugeordnete Pumpe 9 aktiviert ist, so dass in dieser ein Unterdruck erzeugt wird. Gleichzeitig wird mit der Steuereinheit 10 eine Reinfiltration der unteren Filtereinheit 6 bewirkt. Demzufolge wird in diesem Fall ein Grundwasserkreislauf erhalten, dessen Richtung im Vergleich zur Situation gemäß Figur 3a umgekehrt ist.

Durch eine Zeitsteuerung derart, dass die Steuereinheit 10 die Pumpen 9 alternierend aktiviert, wird ein pulsierender bzw. oszillierender Grundwasserkreislauf erhalten. Zudem lässt sich durch zyklisches Variieren der Pumpleistung der aktivierten Pumpe 9 ein pulsierender, oszillierender Grundwasserkreislauf realisieren.

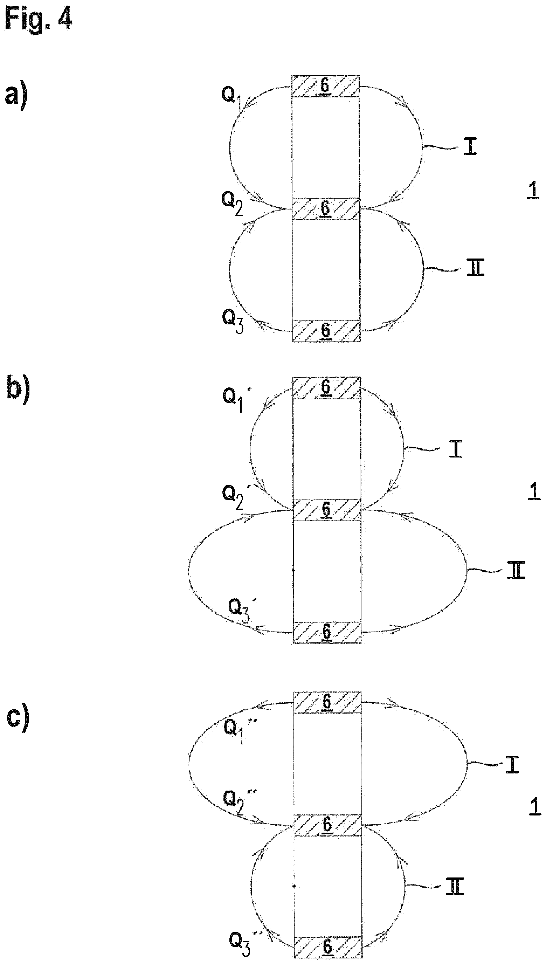

Die Figuren 4a bis 4c zeigen ein Beispiel einer Filteranordnung 1 mit drei Filtereinheiten 6. Dabei zeigen die Figuren 4a bis 4c die Situation, dass nur die Pumpe 9 aktiviert ist, die der mittleren Filtereinheit 6 zugeordnet ist, so dass in dieser Filtereinheit 6 ein Unterdruck entsteht. Für die oberste und die unterste Filtereinheit 6 erfolgt eine Reinfiltration durch Zufuhr von Wasser.

Demzufolge wird ein Grundwasserkreislauf von der obersten zur mittleren Filtereinheit 6 (Pfeil I) und ein Grundwasserkreislauf von der untersten zur mittleren Filtereinheit 6 erhalten (Pfeil II).

Bei dieser Ausführungsform werden mit der Steuereinheit 10 die Pumprate der aktivierten Pumpe 9 und die Reinfiltration der obersten Filtereinheit 6 mittels der Steuereinheit 10 variiert.

Figur 4a zeigt die Situation, wo für die oberste Filtereinheit 6 eine Förderrate $Q_1$, für die mittlere Filtereinheit 6 eine Förderrate $Q_2$ und für die unterste Filtereinheit 6 eine Förderrate $Q_3$ erhalten wird, wobei gilt:

$$Q_1 + Q_3 = Q_2$$

Figur 4b zeigt eine Veränderung der Förderraten mit:

$$Q_1{}' = \tfrac{1}{4}\, Q_1$$

$$Q_2{}' = Q_2$$

$$Q_3{}' = \tfrac{3}{4}\, Q_3$$

Auch hier gilt:

$$Q_1{}' + Q_3{}' = Q_2{}'$$

Figur 4c zeigt eine Veränderung der Förderraten mit:

$$Q_1{}'' = \tfrac{3}{4}\, Q_1$$

$$Q_2{}'' = Q_2$$

$$Q_3'' = \tfrac{1}{4}\, Q_3$$

Auch hier gilt:

$$Q_1'' + Q_3'' = Q_2''$$

Wie die Figuren 4a bis 4c zeigen, wird durch Änderung der Pumprate der aktivierten Pumpe 9 der mittleren Filtereinheit 6 und durch Anpassung der Reinfiltration der weiteren Filtereinheiten 6 eine Variation der Grundwasserkreisläufe erzielt.

Durch alternierende Aktivierung unterschiedlicher Pumpen 9 kann auch eine Richtungsänderung der Grundwasserkreisläufe erzielt werden.

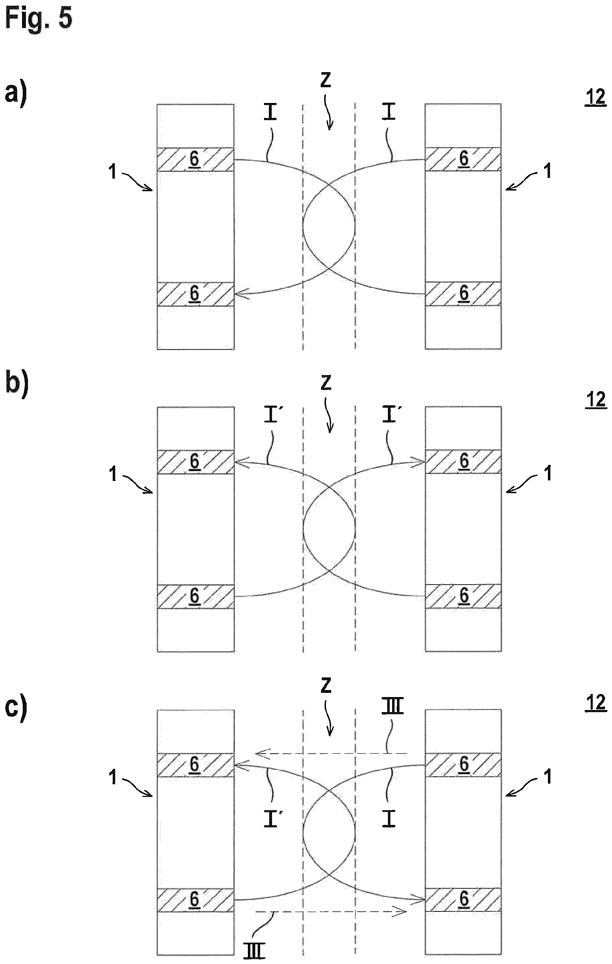

Die Figuren 5a bis 5c zeigen ein Ausführungsbeispiel der erfindungsgemäßen Vorrichtung in Form einer Mehrfachfilteranordnung 12. Die Mehrfachfilteranordnung 12 umfasst im vorliegenden Fall zwei identische Filteranordnungen 1, was jedoch nicht zwingend ist.

Jede Filteranordnung 1 weist im vorliegenden Fall zwei Filtereinheiten 6 auf, denen jeweils wieder eine Pumpe 9 und ein Förderrohr 8 zugeordnet ist, insbesondere entsprechend den Ausführungsformen der Figuren 1 und 2. Die Steuerung aller Filteranordnungen 1, insbesondere deren Pumpen 9, erfolgt zentral über die Steuereinheit 10.

Figur 5a zeigt die Situation, dass in beiden Filteranordnungen 1 nur die Pumpe 9 der unteren Filtereinheit 6 aktiviert ist, so dass dort ein Unterdruck entsteht. Für die obere Filtereinheit 6 jeder Filteranordnung 1 wird von der Steuereinheit 10 gesteuert eine Reinfiltration durchgeführt, so dass in dieser ein Überdruck entsteht.

Dadurch wird für jede Filteranordnung 1 ein Grundwasserkreislauf erhalten, der von der oberen Filtereinheit 6 zur unteren Filtereinheit 6 führt, wie mit den Pfeilen I gekennzeichnet.

Die Grundwasserkreisläufe der Filteranordnung 1 überlappen teilweise, indem sich die Strömungen der Grundwasserkreisläufe überlagern (Bereich Z), so dass dort eine Wechselwirkung der Grundwasserkreisläufe vorhanden ist. Der Bereich Z der Wechselwirkung kann durch die Pumpraten der aktivierten Pumpen 9 eingestellt werden.

Figur 5b zeigt die umgekehrte Anordnung. In diesem Fall sind die Pumpen 9 aktiviert, die dem oberen Filtereinheiten 6 der Filteranordnung 1 zugeordnet sind, so dass in diesen Filtereinheiten 6 ein Unterdruck entsteht. In den unteren Filtereinheiten 6 entsteht durch Reinfiltration ein Überdruck.

Dadurch erfolgt im Vergleich zur Situation gemäß Figur 5a eine Richtungsumkehr der Grundwasserkreisläufe (Pfeil I').

Durch alternierendes Aktivieren der Pumpen 9 der unteren Filtereinheit 6 und der Pumpen 9 der oberen Filtereinheit 6 können pulsierende Grundwasserkreisläufe erzeugt werden.

Figur 5c zeigt die Situation, in welcher in der linken Filteranordnung 1 nur die Pumpe 9 der oberen Filtereinheit 6 aktiviert ist und in der rechten Filteranordnung 1 nur die Pumpe 9 der unteren Filtereinheit 6 aktiviert. Damit werden gegenläufige Grundwasserkreisläufe (Pfeile I, I') erhalten.

Durch die Wechselwirkung der Grundwasserkreisläufe im Bereich Z werden dadurch Ausgleichsströme von einer zur anderen Filteranordnung 1 erhalten (in Figur 5c mit den Pfeilen III bezeichnet). Mit den Ausgleichsströmen kann insbesondere ein Austausch von in dem Grundwasserkreislauf erhaltenen Inhaltsstoffen erfolgen.

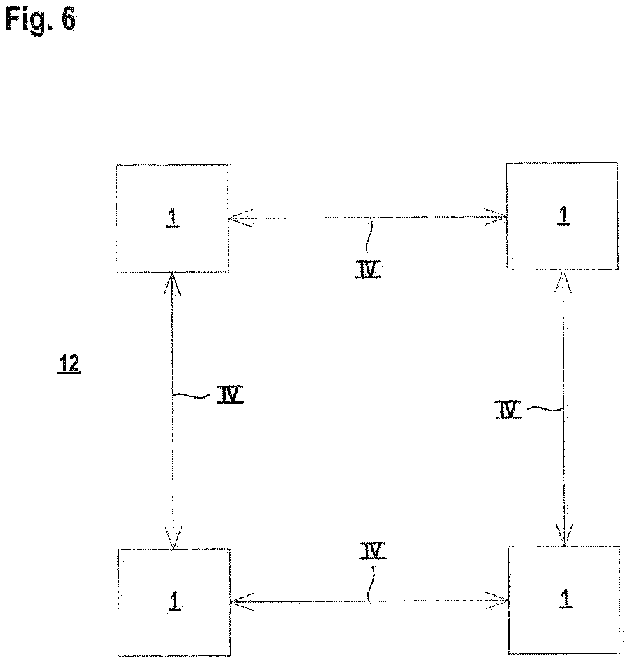

Die Mehrfachfilteranordnung 12 kann mehr als zwei Filteranordnungen 1 aufweisen, wie in Figur 6 beispielhaft in einer Draufsicht dargestellt.

Diese Mehrfachfilteranordnung 12 umfasst vier Filteranordnungen 1, wobei jeweils für nächste Nachbarn von Filteranordnungen 1 eine Wechselwirkung von Grundwasserkreisläufen gegeben ist, wie mit den Pfeilen IV veranschaulicht.

Generell kann die Anzahl von wechselwirkenden Filteranordnungen 1 sowie der Grad von Wechselwirkungen von Grundwasserkreisläufen über die Steuereinheit 10 vorgegeben werden.

Bei den Mehrfachfilteranordnungen 12, insbesondere gemäß den Figuren 5a bis 5c und 6 können die Durchlassöffnungen 7 der Filteranordnungen 1 so dimensioniert sein, dass gerichtete Strömungen der Grundwasserkreisläufe zwischen benachbarten Filteranordnungen 1 erhalten werden.

Bezugszeichenliste

| | |
|---|---|
| (1) | Filteranordnung |
| (2) | Erdreich |
| (2a) | Erdoberfläche |
| (3) | Wasseraufbereitungseinheit |
| (4) | Behandlungsstation |
| (5) | Rohr |
| (6) | Filtereinheit |
| (7) | Durchlassöffnung |
| (8) | Förderrohr |
| (9) | Pumpe |
| (10) | Steuereinheit |
| (11a-d) | Zentriereinsatz |
| (12) | Mehrfachfilteranordnung |

**Patentansprüche**

1. Vorrichtung mit wenigstens einer Filteranordnung (1), wobei die oder jede Filteranordnung (1) ein Rohr (5) aufweist, das in einem Schacht angeordnet ist, der in ein Erdreich (2) eingearbeitet ist und dessen Oberseite an einer Erdoberfläche (2a) des Erdreichs (2) ausmündet, wobei in dem Rohr (5) wenigstens zwei Filtereinheiten (6) in unterschiedlichen Höhenniveaus in Abstand zueinander angeordnet sind, wobei das Rohr (5) im Bereich jeder Filtereinheit (6) wenigstens abschnittsweise wasserdurchlässig ist, wobei jeder Filtereinheit (6) eine Pumpe (9) und ein in Richtung der Erdoberfläche (2a) verlaufendes Förderrohr (8) zugeordnet ist, **dadurch gekennzeichnet, dass** eine Steuereinheit (10) vorhanden ist, die eine zeitabhängige Steuerung der Pumpen (9) derart durchführt, dass selektiv nur eine der Pumpen (9) aktiviert wird, wobei im Bereich der dieser Pumpe (9) zugeordneten ersten Filtereinheit (6) ein Unterdruck erzeugt wird, und dass durch Reinfiltration vom Wasser im Bereich der weiteren Filtereinheit (6) ein Überdruck generiert wird, wodurch im Erdreich (2) ein Grundwasserkreislauf mit einer Strömung von der weiteren Filtereinheit (6) zur ersten Filtereinheit (6) erhalten wird.

2. Vorrichtung nach Anspruch 1, **dadurch gekennzeichnet, dass** mittels der Steuereinheit (10) eine zeitlich variierende Aktivierung der Pumpen (9) durchgeführt wird, wobei der Zeitablauf der Aktivierungen einstellbar ist.

3. Vorrichtung nach einem der Ansprüche 1 oder 2, **dadurch gekennzeichnet, dass** die Reinfiltration eine von der Steuereinheit (10) gesteuerte Wasserzufuhr zum Förderrohr (8) der weiteren Filtereinheit (6) ist.

4. Vorrichtung nach einem der Ansprüche 1 bis 3, **dadurch gekennzeichnet, dass** mittels der Steuereinheit (10) die Pumpen (9) alternierend in einem einstellbaren Zeittakt aktiviert werden.

5. Vorrichtung nach Anspruch 4, **dadurch gekennzeichnet, dass** durch eine alternierende Aktivierung der Pumpen (9) ein oszillierender Grundwasserkreislauf generiert wird.

6. Vorrichtung nach einem der Ansprüche 1 bis 5, **dadurch gekennzeichnet, dass** mit der Steuereinheit (10) Pumpraten von aktivierten Pumpen (9) gesteuert werden.

7. Vorrichtung nach einem der Ansprüche 1 bis 6, **dadurch gekennzeichnet, dass** die oder wenigstens eine Filteranordnung (1) wenigstens drei Filtereinheiten (6) aufweist, die im Rohr (5) in unterschiedlichen Höhenniveaus in Abstand zueinander angeordnet sind, und dass mit der Steuereinheit (10) nur eine einer Filtereinheit (6) zugeordnete Pumpe (9) aktiviert ist.

8. Vorrichtung nach Anspruch 7, **dadurch gekennzeichnet, dass** eine Reinfiltration von Filtereinheiten (6), die einer nicht aktivierten Pumpe (9) zugeordnet sind, erfolgt.

9. Vorrichtung nach einem der Ansprüche 1 bis 8, **dadurch gekennzeichnet, dass** diese mehrere Filteranordnungen (1) aufweist, wobei die Pumpen (9) aller Filteranordnungen (1) von der Steuereinheit (10) gesteuert werden.

10. Vorrichtung nach Anspruch 9, **dadurch gekennzeichnet, dass** Reinfiltrationen von Filtereinheiten (6) aller Filteranordnungen (1) von der Steuereinheit (10) gesteuert werden.

11. Vorrichtung nach einem der Ansprüche 9 oder 10, **dadurch gekennzeichnet, dass** durch Steuerung von Pumpen (9) der Filteranordnung (1) mittels der Steuereinheit (10) wechselwirkende Grundwasserkreisläufe unterschiedlicher Filteranordnungen (1) erhalten werden, wobei die Wechselwirkungen durch Überlagerungen der Strömungen der Grundwasserkreisläufe ausgebildet werden.

12. Vorrichtung nach Anspruch 11, **dadurch gekennzeichnet, dass** der Grad von Wechselwirkungen verschiedener Grundwasserkreisläufe durch die Steuereinheit (10) vorgegeben wird.

13. Vorrichtung nach einem der Ansprüche 11 oder 12, **dadurch gekennzeichnet, dass** die Anzahl von wechselwirkenden Grundwasserkreisläufen über die Steuereinheit (10) vorgegeben wird.

14. Vorrichtung nach einem der Ansprüche 9 bis 13, **dadurch gekennzeichnet, dass** mittels der Steuereinheit (10) eine Steuerung von Pumpen (9) von Filteranordnungen (1) derart durchgeführt wird, dass Strömungen von einer Filteranordnung (1) zu einer weiteren Filteranordnung (1) generiert werden.

15. Verfahren zum Betrieb einer Vorrichtung mit wenigstens einer Filteranordnung (1), wobei die oder jede Filteranordnung (1) ein Rohr (5) aufweist, das in einem Schacht angeordnet ist, der in ein Erdreich (2) eingearbeitet ist und dessen Oberseite an einer Erdoberfläche (2a) des Erdreichs (2) ausmündet, wobei in dem Rohr (5) wenigstens zwei Filtereinheiten (6) in unterschiedlichen Höhenniveaus in Abstand zueinander angeordnet sind, wobei das Rohr (5) im Bereich jeder Filtereinheit (6) wenigstens abschnittsweise wasserdurchlässig ist, wobei jeder Filtereinheit (6) eine Pumpe (9) und ein in Richtung der Erdoberfläche (2a) verlaufendes Förderrohr (8) zugeordnet ist, **dadurch gekennzeichnet, dass** eine Steuereinheit (10) vorhanden ist, die eine zeitabhängige Steuerung der Pumpen (9) derart durchführt, dass selektiv nur eine der Pumpen (9) aktiviert wird, wobei im Bereich der dieser Pumpe (9) zugeordneten ersten Filtereinheit (6) ein Unterdruck erzeugt wird, und dass durch Reinfiltration vom Wasser im Bereich der weiteren Filtereinheit (6) ein Überdruck generiert wird, wodurch im Erdreich (2) ein Grundwasserkreislauf mit einer Strömung von der weiteren Filtereinheit (6) zur ersten Filtereinheit (6) erhalten wird.

**Fig. 1**

EP 4 527 515 A1

# Fig. 2

Fig. 3

a)

b)

# Fig. 4

a)

b)

c)

# Fig. 5

a)

b)

c)

# Fig. 6

**Europäisches Patentamt**
**European Patent Office**
**Office européen des brevets**

# EUROPÄISCHER RECHERCHENBERICHT

Nummer der Anmeldung

EP 23 19 8440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 4 056 292 A1 (IEG TECH GMBH [DE]) 14. September 2022 (2022-09-14) * Ansprüche; Abbildungen * ----- | 1-15 | INV. B09C1/00 C02F1/00 E21B43/02 |
| Y | DE 10 2008 055623 A1 (NILLERT PETER [DE]) 6. Mai 2010 (2010-05-06) * Absätze [0059] – [0074]; Ansprüche; Abbildungen * ----- | 1-15 | E03B3/16 E03B3/18 ADD. C02F103/06 |

RECHERCHIERTE SACHGEBIETE (IPC)

B09C
C02F
E21B
E03B

Der vorliegende Recherchenbericht wurde für alle Patentansprüche erstellt

| Recherchenort | Abschlußdatum der Recherche | Prüfer |
|---|---|---|
| München | 25. Februar 2024 | Tassinari, Francesca |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

# EP 4 527 515 A1

**ANHANG ZUM EUROPÄISCHEN RECHERCHENBERICHT
ÜBER DIE EUROPÄISCHE PATENTANMELDUNG NR.**

EP 23 19 8440

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2024

| Im Recherchenbericht angeführtes Patentdokument | Datum der Veröffentlichung | Mitglied(er) der Patentfamilie | Datum der Veröffentlichung |
|---|---|---|---|
| EP 4056292 A1 | 14-09-2022 | CN 216571925 U<br>DE 202021101247 U1<br>EP 4056292 A1 | 24-05-2022<br>14-06-2022<br>14-09-2022 |
| DE 102008055623 A1 | 06-05-2010 | DE 102008055623 A1<br>EP 2367985 A2<br>WO 2010060403 A2 | 06-05-2010<br>28-09-2011<br>03-06-2010 |

EPO FORM P0461

Für nähere Einzelheiten zu diesem Anhang : siehe Amtsblatt des Europäischen Patentamts, Nr.12/82